# EUROPÄISCHE PATENTSCHRIFT

(11) **EP 0 563 807 B1**
(45) Veröffentlichungstag und Bekanntmachung des Hinweises auf die Patenterteilung: **18.09.1996**
(21) Anmeldenummer: 93104993.6
(22) Anmeldetag: 26.03.1993
(51) Int. Cl.: B60H 1/00, B61D 27/00

(54) **Verdichter-Verflüssiger-Aggregat für die Klimaanlage eines Fahrzeuges**
Compressor and condenser unit for air-conditioning in a vehicle
Unité de compresseur et de condenseur pour la climatisation d'une voiture

(30) Priorität: 01.04.1992 DE 4210788
(43) Veröffentlichungstag der Anmeldung: 06.10.1993
(73) Patentinhaber: ABB PATENT GmbH, D-68309 Mannheim (DE)
(72) Erfinder: Nestler, Dietrich, W-6800 Mannheim (DE)
(74) Vertreter: Rupprecht, Klaus, Dipl.-Ing.

(56) Entgegenhaltungen:
- US-A- 3 218 820
- US-A- 3 218 821
- US-A- 5 005 372
- ZEV-GLASERS ANNALEN Nr. 113, September 1989, Seiten 394 - 400 , XP000069437 VON DIETER H. KLUMPP 'Leichtbau der Elektro- und Klima- Ausruestungsteile für Reisezugwagen'
- ELEKTRISCHE BAHNEN Bd. 78, Nr. 8, Juli 1908, München Seiten 214 - 221 JOERG BRENNEISEN 'Klimaanlage in Reisezugwagen'

## Beschreibung

Die Erfindung bezieht sich auf ein Verdichter-Verflüssiger-Aggregat für die Klimaanlage eines Fahrzeuges gemäß dem Oberbegriff des Anspruchs 1 und kann insbesondere bei Reisezugwagen eingesetzt werden.

Ein solches Verdichter-Verflüssiger-Aggregat für die Klimaanlage eines schienengebundenen Fahrzeuges ist aus der US-A-3 218 820 bekannt. Dort wird eine Klimaanlage für Fahrzeuge beschrieben, welche einen Grundrahmen aus Profilstahl in Schweißausführung aufweist, in welchem Grundplatten montiert sind, die die einzelnen Baukomponenten der Klimaanlage tragen.

Aus der US-A-5 005 372 ist eine Klimaanlage zur Dachmontage auf einem Fahrzeug bekannt, deren Rahmen aus einer Vielzahl, der Fahrzeugdachausbildung präzise angepaßten, gekanteten Flächen besteht. Aus Blechkonstruktionen gebildete Podeste tragen die einzelnen Baukomponenten der Klimaanlage.

Ein weiteres Verdichter-Verflüssiger-Aggregat ist aus ZEH-Glasers Annalen Heft 9/89, Seite 394 bis 400 (ABB-Druckschrift DVK 13689 D, insbesondere Seite 397, Bild 5) bekannt. Das bekannte Verdichter-Verflüssiger-Aggregat ist in Rahmenbauweise aus Profilstahl in Schweißausführung gestaltet. Ein derartiger geschweißter Rahmen erfordert einen relativ hohen Zeitaufwand für Zuschnitt, Bohren von Montagelöchern und Schweißen der Einzelprofile. Der Rahmen muß nach dem Zusammenschweißen mit viel Zeitaufwand gerichtet werden, um einen durch das Schweißen verursachten Verzug zu beheben. Die anschließende Montage der Komponenten, wie Verdichter, Verflüssiger, Lüfter, der Armaturen, Rohrleitungen und elektrischen Verdrahtung ist teilweise schwierig und zeitaufwendig, da die freie Zugänglichkeit behindert ist.

Ferner läßt die starre Schweißkonstruktion keine modulare Bauweise zu, d.h. jedes Verdichter-Verflüssiger-Aggregat ist individuell nach Vorgabe (Wagenbreite, Aufhängung) dimensioniert und kann nicht universell für unterschiedliche Fahrzeugbreiten oder Fahrzeugaufhängungen verwendet werden.

Der Erfindung liegt die Aufgabe zugrunde, ein Verdichter-Verflüssiger-Aggregat für die Klimaanlage eines Fahrzeuges der eingangs genannten Art anzugeben, das in einfacher Weise einen universellen Einsatz bei Fahrzeugen unterschiedlicher Art und Breite ermöglicht.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, daß sich durch den modularen Aufbau des Verdichter-Verflüssiger-Aggregates - d.h. durch die Aufteilung in zwei getrennte Module - universelle Einbaumöglichkeiten ergeben. Durch unterschiedlich dimensionierte Seitenwände, Decken und Böden kann bei gleichem Verdichtermodul und Verflüssigermodul die Aggregatlänge und Aufhängung an unterschiedliche Wagenbreiten und Wagenaufhängungen angepaßt werden. Eine vertikale Montage des Aggregates im Wagen hängend ist in gleicher Weise möglich wie ein Aufstellen bzw. Aufsetzen auf Gleitschienen in die Bodenwanne von Hochgeschwindigkeitszügen. Selbst ein Aufstellen dieser Leichtbauaggregate auf das Wagendach ist ausführbar. Bei dieser Version werden vorteilhaft mit speziell gestalteten Abdeckblechen die Fahrzeugkonturen nachgebildet.

Darüberhinaus können Verdichtermodul und Verflüssigermodul auch an getrennten Einbauorten am oder im Wagen montiert werden, wobei zur Verbindung beider Module lediglich Rohrleitungen zur Führung des Kältemittels sowie Elektroleitungen entsprechend zu verlegen sind.

Insgesamt ist das vorgeschlagene Verdichter-Verflüssiger-Aggregat preiswerter herstellbar als bekannte Aggregate in Profilrahmen-Schweißkonstruktion und zudem leichter, was speziell bei Schienenfahrzeugen sehr vorteilhaft ist. Bei der Montage sind verringerte Durchlaufzeiten erzielbar.

Weitere Vorteile sind aus der nachstehenden Beschreibung ersichtlich. Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert.

Es zeigen:
- Figur 1: die einzelnen Baueinheiten eines Verdichter-Verflüssiger-Aggregates,
- Figuren 2, 3: perspektivische Ansichten auf das fertige Verdichter-Verflüssiger-Aggregat,
- Figur 4: eine Variante mit getrennter Montage von Verdichtermodul und Verflüssigermodul.

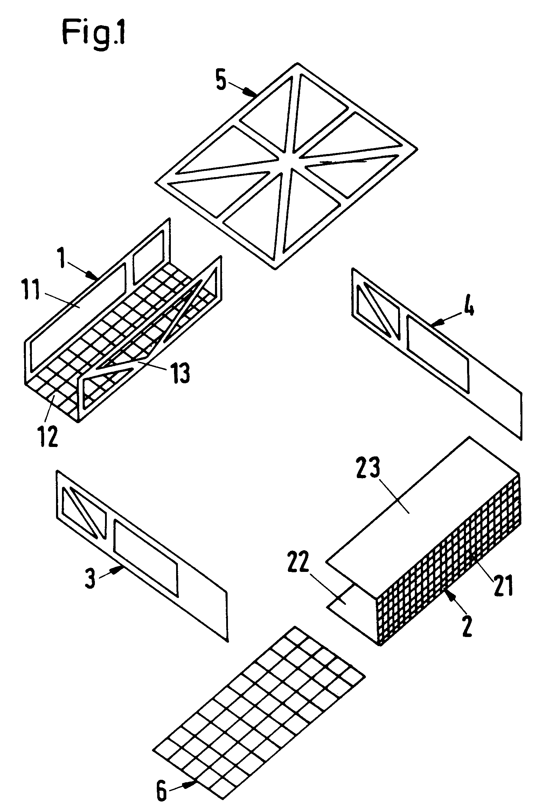

In Figur 1 sind die einzelnen Baueinheiten eines Verdichter-Verflüssiger-Aggregates dargestellt. Es ist zu erkennen, daß das Aggregat aus den Baueinheiten Verdichtermodul 1, Verflüssigermodul 2, Seitenwände 3, 4, Decke 5 und Boden 6 zusammengesetzt ist. Alle Baueinheiten bestehen aus einfachen, gekanteten Einzelblechen, wobei wahlweise Aluminium oder Stahl als Material einsetzbar ist.

Die Baueinheit Verdichtermodul 1 stellt ein komplettes, weitgehend selbsttragendes Modul dar und weist eine Stirnwand 11, einen Boden 12 - vorzugsweise einen Gitterboden - und eine Zwischenwand 13 (jeweils aus gekanteten Einzelblechen) auf. Die einzelnen Komponenten des Verdichtermoduls 1, wie Verdichter, Kältemittelsammler, Rohrschaltung, Elektro- und Elektronikkasten usw. sind aus Gründen der Übersichtlichkeit in Figur 1 nicht dargestellt.

Die Baueinheit Verflüssigermodul 2 stellt ebenfalls ein komplettes, weitgehend selbsttragendes Modul dar und weist eine Stirngitterwand 21, einen Boden 22 und eine Abdeckung 23 (jeweils aus gekanteten Einzelblechen) auf. Die einzelnen Komponenten des Verflüssigermoduls, wie Verflüssiger, Lüfter usw. sind aus Gründen der Übersichtlichkeit ebenfalls in Figur 1 nicht dargestellt.

Die Baueinheiten Verdichtermodul 1 und Verflüssigermodul 2 werden komplett mit allen erforderlichen Komponenten bestückt, bevor das Verdichter-Verflüssiger-Aggregat selbst unter Verwendung dieser Module zusammengesetzt wird. Das hat den Vorteil der besseren Zugänglichkeit während der Einzelmontage, da das Verdichtermodul 1 und das Verflüssigermodul 2 soweit wie möglich offen sind, was die Montage sehr erleichtert. Die Durchlaufzeit ist im Vergleich zum bekannten Aggregat verringert, da gleichzeitig Montagepersonal sowohl am Verdichtermodul 1 als auch am Verflüssigermodul 2 arbeiten kann.

Nach Fertigstellung des Verdichtermoduls 1 und des Verflüssigermoduls 2 wird das Verdichter-Verflüssiger-Aggregat aus den vorstehend erwähnten Baueinheiten 1 bis 6 zusammengesetzt. Dabei sind unterschiedliche Varianten unter Verwendung der gleichen Verdichtermodule 1 und Verflüssigermodule 2 herstellbar, indem Seitenwände 3, 4, Decken 5 und Boden 6 unterschiedlicher Abmessungen zur Verfügung stehen. Die Seitenwände 3, 4 aus gekantetem Blech überdecken jeweils die Seitenbereiche des Verdichtermoduls 1 und des Verflüssigermoduls 2 sowie den zwischen beiden Baueinheiten 1, 2 erforderlichen Zwischenraum. Die Decke 5 aus gekanteten Blech überspannt den Deckenbereich des Verdichtermoduls 1 und den Zwischenraum zwischen beiden Baueinheiten 1, 2. Der Boden 6 aus gekantetem Blech überdeckt lediglich den zwischen beiden Baueinheiten 1, 2 erforderlichen Zwischenraum.

Es sind selbstverständlich andere Varianten ausführbar, bei denen beispielsweise die Decke 5 zusätzlich den Deckenbereich des Verflüssigermoduls 2 überspannt, wobei bei dieser Variante die Abdeckung 23 entfallen kann. Desweiteren sind Varianten herstellbar, bei denen der Boden 6 zusätzlich die Bodenbereiche von Verdichtermodul 1 und/oder Verflüssigermodul 2 überdeckt, wobei bei dieser Variante die Böden 12 und/oder 22 entfallen können. Es sollte jedoch stets sichergestellt sein, daß je nach Aufstellung zumindest einzelne Boden- oder Deckenteile getrennt abnehmbar sind, um z.B. den Ausbau und Austausch eines defekten Verdichters oder eines defekten Lüfters durch den Bodenbereich oder über die Decke zu ermöglichen.

Sowohl die Einzelmontage der Module 1, 2 als auch die Montage des Verdichter-Verflüssiger-Aggregates aus den einzelnen Baueinheiten 1 bis 6 erfolgt vorzugsweise durch Schraubbefestigungen. Infolge der reinen Schraubkonstruktion sind keine Montagelehren erforderlich, denn insbesondere über Paßschrauben kann eine sehr genaue Fixierung der einzelnen Blechteile erfolgen. Da sich das Aggregat während des Zusammenbaus nicht verzieht, entfällt das aufwendige Nachrichten. Da alle Einzelbleche der Baueinheiten 1 bis 6 bereits vor der Montage des Aggregates vollständig fertiggestellt sind und bereits alle zur Schraubbefestigung erforderlichen Bohrungen besitzen und zudem oberflächengeschützt sind (z.B. verzinkt oder lackiert), sind keinerlei Nacharbeiten erforderlich. Die Bohrungen können dabei vorteilhaft gestanzt werden.

Alternativ hierzu können die einzelnen Baueinheiten 1 bis 6 auch im Punktschweißverfahren zusammengesetzt werden, wobei auch hierbei kein Verziehen auftritt, das ein aufwendiges Nachrichten erforderlich machen würde. Desgleichen ist es auch möglich, die Einzelmontage der Module 1 und 2 durch Punktschweißung vorzunehmen.

Bei der Gesamtmontage des Aggregates müssen neben dem Zusammensetzen der Baueinheiten 1 bis 6 lediglich die Kühlmittelrohre beider Module 1, 2 verbunden sowie Elektroleitungen verlegt werden. Abschließend erfolgt die Montage der in Figur 1 nicht dargestellten Aufhängungen.

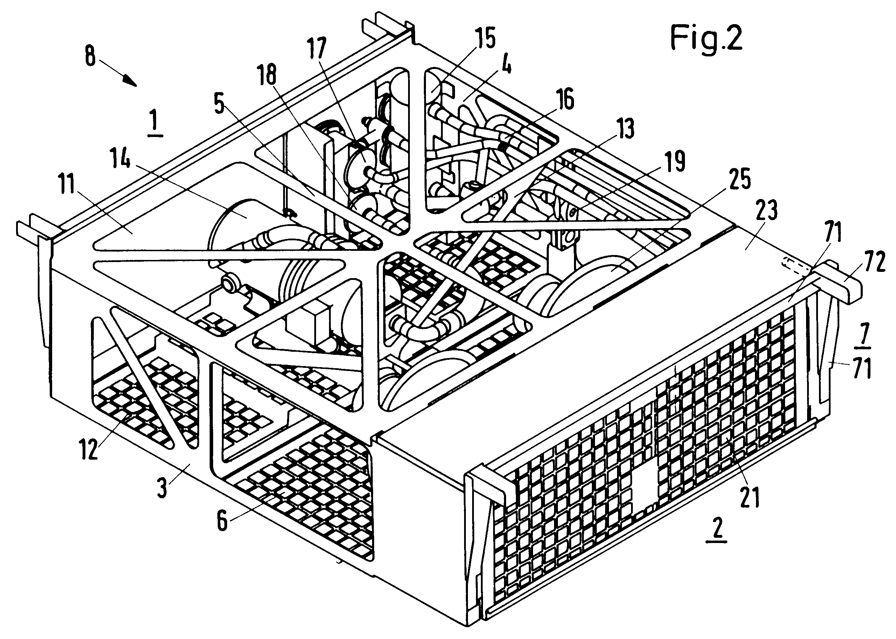

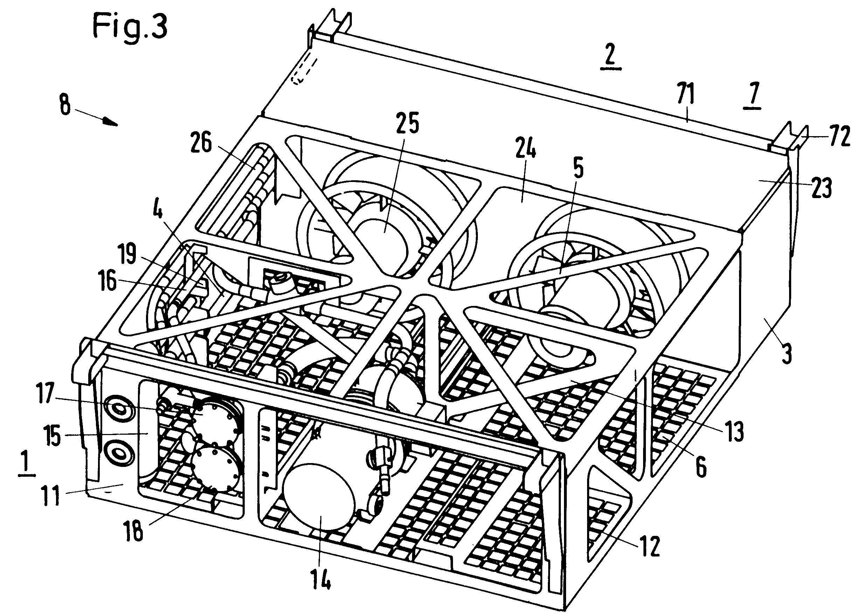

In den Figuren 2 und 3 sind perspektivische Ansichten auf das fertige Verdichter-Verflüssiger-Aggregat dargestellt und zwar in Figur 2 vom Verflüssigermodul zum Verdichtermodul hin und in Figur 3 vom Verdichtermodul zum Verflüssigermodul hin. Es sind jeweils das Verdichtermoduls 1 mit Stirnwand 11, Boden 12 und Zwischenwand 13 zu erkennen. Das Verdichtermodul 1 trägt als Komponenten den Verdichter 14 (Schraubenverdichter), den Kältemittelsammler 15, eine verzweigte Rohrschaltung 16, einen Filtertrockner 17, ein Sieb 18 und Flansche 19 für den Anschluß der zum Verdampfer führenden Kältemittelleitungen. Vorzugsweise trägt das Verdichtermodul 1 zusätzlich einen nicht dargestellten Elektro- und Elektronikkasten zur Spannungsversorgung und An-Steuerung des Verdichters 14 und des Lüfters 25.

Ferner ist jeweils das Verflüssigermodul 2 mit Stirngitterwand 21 (Verflüssigergitter), Boden 22, Abdeckung 23 und Lüftertragblech 24 zu erkennen. Das Verflüssigermodul 2 trägt als Komponenten den durch das Lüftertragblech 24, die Stirngitterwand 21 und die Seitenwände 3,4 verdeckten Verflüssiger (Kondensator), ein oder mehrere Lüfter 25 und eine Rohrschaltung 26. Dabei ist es vorteilhaft, wenn die Rohrschaltungen 26 und 16 bereits bei der Einzelmontage der Baueinheiten 1 und 2 komplett fertiggestellt sind. Bei der Gesamtmontage des Aggregates werden dann lediglich die beiden Rohrschaltungen 26, 16 über zusätzliche kurze Rohrstücke miteinander verbunden.

In den Figuren 2 und 3 ist desweiteren zu erkennen, daß nach Montage der Seitenwände 3, 4, der Decke 5 und des Bodens 6 ein selbsttragendes, mechanisch stabiles Verdichter-Verflüssiger-Aggregat 8 geschaffen wird. Dabei sind Stirnwand 11, Zwischenwand 13, Seitenwände 3, 4 und Decke 5 nicht als großflächige Blechkonstruktionen ausgebildet, sondern weisen große Durchbrüche auf, die eine Gewichtsreduktion des Aggregats 8 bewirken und die Zugänglichkeit auch nach erfolgter Montage erleichtern, ohne dabei die mechanische Stabilität zu verringern. Boden 6 und 12 sind als Gitterboden ausgebildet und damit ebenfalls durchlässig.

Boden 22, Abdeckung 23 und Lüftertragblech 24 sind geschlossen ausgeführt, um einen gezielten Luftstrom über die Stirngitterwand 21, den Verflüssiger und die Lüfter 25 zu erzielen. Die durch den Verflüssiger strömende Kühlluft gelangt durch die Durchbrüche der Einzelbleche nach außen bzw. kühlt vorteilhaft Verdichter, Kältemittelsammler sowie die Kälttearmaturen und strömt nach vorn ab..

In den Figuren 2 und 3 ist die zur Befestigung des Aggregats 8 am oder im Fahrzeug geeignete Aufhängung 7 zu erkennen. Die Aufhängung 7 besteht aus zwei U-förmigen Profilrahmen 71, die an den Stirnflächen des Aggregats 8, d.h. an der Stirnwand 11 und an der Stirngitterwand 21 befestigt sind - entweder durch Schraubkonstruktion oder Punktschweissung. Die Profilrahmen 71 tragen jeweils mehrere zur Befestigung des Aggregats 8 geeignete Aufhängebügel 72.

Wie bereits eingangs erwähnt, kann das Aggregat 8 beispielsweise wahlweise horizontal (wie üblich) am oder im Fahrzeug bzw. auf dem Fahrzeugdach montiert werden.

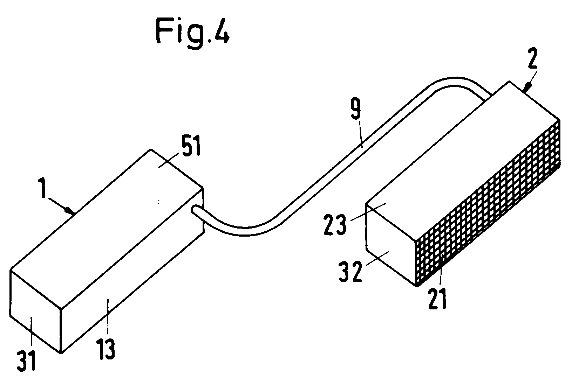

Daneben ist es auch möglich, auf die durchgehenden Seitenwände 3, 4, die Decke 5 und den Boden 6 zu verzichten, wenn die Module 1, 2 völlig getrennt voneinander am oder im Fahrzeug zu montieren sind, wie dies in Figur 4 dargestellt ist. Bei dieser Variante werden beide Module 1, 2 zusätzlich jeweils mit eigenen Seitenwänden 31, 32 und ggf. Decken 51 versehen, um eine absolut selbsttragende Bauweise eines jeden Moduls 1, 2 zu erzielen. Mit Ausnahme der zusätzlichen Seitenwände 31, 32 und ggf. Decke 51 handelt es sich dabei allerdings um die gleichen, auch zur Bildung der Aggregate 8 eingesetzten Module 1, 2, was die Herstellung und Ersatzteil-Vorratshaltung entscheidend vereinfacht. Die Verbindungsleitungen (Kältemittelrohrleitungen, Elektroleitungen) sind in Figur 4 mit Ziffer 9 bezeichnet.

Wenn ein entsprechendes, vorzugsweise in gleicher Technik ausgebildetes Luftbehandlungsaggregat zur Klimatisierung der Außen- bzw. Umluft mit Luftfilter, Lüfter, Luftkühler, Heizregister zur Verfügung steht, ist das Zusammenschrauben des Verdichter-Verflüssiger-Aggregates mit dem Luftbehandlungsaggregat zu einem Kompaktklimagerät problemlos möglich. Außer der mechanischen Verbindung (Blechverbindung) müssen hierzu durch Zusammenfügen der Kältemittelrohre lediglich der Kältekreislauf geschlossen und die elektrischen Kabel miteinander verbunden werden.

Das Kompaktklimagerät hat den Vorteil einer fabrikmäßig gefertigten, geprüften und probegelaufenen Anlage, die nur noch im/am/auf das Fahrzeug zu montieren ist.

## Patentansprüche

1. Verdichter-Verflüssiger-Aggregat für die Klimaanlage eines Fahrzeuges mit den Komponenten Verdichter, Kältemittelsammler, Verflüssiger und Lüfter, wobei der Verdichter (14) und der Kältemittelsammler (15) in einem eigenen Verdichtermodul (1) sowie der Verflüssiger und der Lüfter (25) in einem eigenen Verflüssigermodul (2) montiert sind, dadurch gekennzeichnet, daß die beiden Module (1,2) jeweils aus gekanteten Einzelblechen (11,12,13;21,22,23) weitgehend selbsttragend aufgebaut und die Kähltemittel-Rohrschaltungen (16, 26) bereits bei der Einzelmontage der Module komplett fertiggestellt sind, daß Verdichtermodul (1) und Verflüssigermodul (2) unter Verwendung von zwei Seitenwänden (3,4), einer Decke (5) und eines Bodens (6) zu einem kompletten, selbsttragenden Aggregat (8) zusammensetzbar sind, wobei die Seitenwände (3,4), die Decke (5) und der Boden (6) jeweils aus gekanteten Einzelblechen bestehen und durch unterschiedlich dimensionierte Seitenwände, Decken und Böden eine Anpassung der Aggregatlänge und Aufhängung an unterschiedliche Wagenbreiten und Wagenaufhängungen erfolgt und daß Verdichtermodul (1) und Verflüssigermodul (2) unter Verwendung von Seitenwänden (31,32) und Decken (51) zu jeweils selbsttragenden Baueinheiten zusammensetzbar sind, wobei die Seitenwände (31,32) und Decken (51) jeweils aus gekanteten Blechen bestehen.

2. Verdichter-Verflüssiger-Aggregat nach Anspruch 1, dadurch gekennzeichnet, daß die gekanteten Einzelbleche (3 bis 6, 11 bis 13, 21 bis 23, 31,32,51) jeweils aus Stahl bestehen.

3. Verdichter-Verflüssiger-Aggregat nach Anspruch 1, dadurch gekennzeichnet, daß die gekanteten Einzelbleche (3 bis 6, 11 bis 13, 21 bis 23, 31,32,51) jeweils aus Aluminium bestehen.

4. Verdichter-Verflüssiger-Aggregat nach wenigstens einem der Ansprüche 1 bis 3, dadurch gekennzeichnet, daß die gekanteten Einzelbleche (3 bis 6, 11 bis 13, 21 bis 23, 31,32,51) bereits vor der Montage oberflächenbehandelt sind.

5. Verdichter-Verflüssiger-Aggregat nach wenigstens einem der Ansprüche 1 bis 4, dadurch gekennzeichnet, daß die gekanteten Einzelbleche (3 bis 6, 11 bis 13, 21 bis 23, 31,32,51) zumindest teilweise Fahrzeugkonturen wie Dach, Bodenwanne, Wagenschürze nachbilden.

6. Verdichter-Verflüssiger-Aggregat nach wenigstens einem der Ansprüche 1 bis 5, dadurch gekennzeichnet, daß die Module (1,2) und/oder das gesamte Aggregat (8) durch reine Schraubkonstruktionen zusammengesetzt sind.

7. Verdichter-Verflüssiger-Aggregat nach Anspruch 6, dadurch gekennzeichnet, daß Paßschrauben zur Blechfixierung eingesetzt sind.

8. Verdichter-Verflüssiger-Aggregat nach wenigstens einem der Ansprüche 1 bis 5, dadurch gekennzeichnet, daß die Module (1,2) und/oder das gesamte Aggregat (8) durch Punktschweißung zusammengesetzt sind.

9. Verdichter-Verflüssiger-Aggregat nach wenigstens einem der Ansprüche 1 bis 8, dadurch gekennzeichnet, daß die gekanteten Einzelbleche (3 bis 6, 11 bis 13, 21,31,32,51) zumindest teilweise mit Durchbrüchen versehen sind.

10. Verdichter-Verflüssiger-Aggregat nach wenigstens einem der Ansprüche 1 bis 9, dadurch gekennzeichnet, daß Aufhängungen (7) zur Montage der Module (1,2) oder des Aggregats (8) am oder im Fahrzeug vorgesehen sind.

11. Verdichter-Verflüssiger-Aggregat nach wenigstens einem der Ansprüche 1 bis 10, gekennzeichnet durch die Verbindung mit einem Luftbehandlungsaggregat mit Luftfilter, Lüfter, Luftkühler, Heizregister zu einem Kompaktklimagerät.

## Claims

1. Compressor/condenser unit for the air-conditioning system of a vehicle, having the components compressor, refrigerant collector, condenser and fan, the compressor (14) and the refrigerant collector (15) being mounted in a separate compressor module (1) and the condenser and the fan (25) being mounted in a separate condenser module (2), characterized in that the two modules (1, 2) are each composed of trimmed individual sheets (11, 12, 13; 21, 22, 23) in a largely self-supporting manner, and the refrigerant pipe circuits (16, 26) are already completely finished upon individual assembly of the modules, in that compressor module (1) and condenser module (2), with the use of two side walls (3, 4), a top (5) and a base (6), can be assembled to form a complete, self-supporting unit (8), the side walls (3, 4), the top (5) and the base (6) in each case consisting of trimmed individual sheets, and adaptation of the unit length and attachment to different carriage widths and carriage attachments being effected by side walls, tops and bases of different dimensions, and in that compressor module (1) and condenser module (2), with the use of side walls (31, 32) and tops (51), can be assembled to form in each case self-supporting construction elements, the side walls (31, 32) and tops (51) in each case consisting of trimmed sheets.

2. Compressor/condenser unit according to Claim 1, characterized in that the trimmed individual sheets (3 to 6, 11 to 13, 21 to 23, 31, 32, 51) are in each case made of steel.

3. Compressor/condenser unit according to Claim 1, characterized in that the trimmed individual sheets (3 to 6, 11 to 13, 21 to 23, 31, 32, 51) are in each case made of aluminium.

4. Compressor/condenser unit according at least one of Claims 1 to 3, characterized in that the the trimmed individual sheets (3 to 6, 11 to 13, 21 to 23, 31, 32, 51) are already surface-treated before assembly.

5. Compressor/condenser unit according to at least one of Claims 1 to 4, characterized in that the the trimmed individual sheets (3 to 6, 11 to 13, 21 to 23, 31, 32, 51) at least partly reproduce vehicle contours such as roof, floor pan, carriage apron.

6. Compressor/condenser unit according to at least one of Claims 1 to 5, characterized in that the modules (1, 2) and/or the entire unit (8) is assembled by all-screw construction.

7. Compressor/condenser unit according to Claim 6, characterized in that body-fit screws are used for the sheet fixing.

8. Compressor/condenser unit according to at least one of Claims 1 to 5, characterized in that the modules (1, 2) and/or the entire unit (8) are assembled by spot welding.

9. Compressor/condenser unit according to at least one of Claims 1 to 8, characterized in that the trimmed individual sheets (3 to 6, 11 to 13, 21, 31, 32, 51) are at least partly provided with apertures.

10. Compressor/condenser unit according to at least one of Claims 1 to 9, characterized in that attachments (7) are provided for mounting the modules (1, 2) or the unit (8) on or in the vehicle.

11. Compressor/condenser unit according to at least one of Claims 1 to 10, characterized by the connection to an air-conditioning unit having air filter, fan, air cooler, radiator to form a compact air-conditioning apparatus.

## Revendications

1. Groupe compresseur-condenseur pour l'installation de climatisation d'un véhicule, comprenant les composants compresseur, collecteur de frigorigène, condenseur et ventilateur, le compresseur (14) et le collecteur de frigorigène (15) étant montés dans un module compresseur (1) indépendant et le condenseur et le ventilateur (25) étant montés dans un module condenseur (2) indépendant, caractérisé par le fait que les deux modules (1, 2) sont réalisés sous une forme essentiellement auto-portante à partir de tôles élémentaires (11, 12, 13; 21, 22, 23) coudées et les circuits de frigorigène (16, 26) sont complètement achevés déjà avant le montage individuel des modules, que le module compresseur (1) et le module condenseur (2) peuvent être assemblés sous la forme d'un groupe (8) complet, auto-portant, avec utilisation de deux parois latérales (3, 4), d'un dessus (5) et d'un fond (6), les parois latérales (3, 4), le dessus (5) et le fond (6) étant formés respectivement de tôles élémentaires coudées et l'utilisation de parois latérales, dessus et fond dimensionnés différemment permettant une adaptation de la longueur du groupe et de la suspension à des largeurs de véhicules et des suspensions de véhicules différents et que le module compresseur (1) et le module condenseur (2) peuvent être assemblés, avec utilisation de parois latérales (31, 32) et de dessus (51), sous la forme d'ensembles autoportants, les parois latérales (31, 32) et les dessus (51) étant constitués respectivement de tôles coudées.

2. Groupe compresseur-condenseur suivant la revendication 1, caractérisé par le fait que les tôles d'acier (3 à 6, 11 à 13, 21 à 23, 31, 32, 51) coudées sont constituées d'acier.

3. Groupe compresseur-condenseur suivant la revendication 1, caractérisé par le fait que les tôles élémentaires (3 à 6, 11 à 13, 21 à 23, 31, 32, 51) coudées sont constituées d'aluminium.

4. Groupe compresseur-condenseur suivant au moins l'une des revendications 1 à 3, caractérisé par le fait que les tôles individuelles (3 à 6, 11 à 13, 21 à 23, 31, 32, 51) coudées sont soumises à un traitement thermique déjà avant le montage.

5. Groupe compresseur-condenseur suivant au moins l'une des revendications 1 à 4, caractérisé par le fait que les tôles élémentaires (3 à 6, 11 à 13, 21 à 23, 31, 32, 51) coudées reproduisent au moins partiellement des contours du véhicule tels que le toit, le plancher, le tablier du véhicule.

6. Groupe compresseur-condenseur suivant au moins l'une des revendications 1 à 5, caractérisé par le fait que les modules (1, 2) et/ou le groupe (8) en entier sont assemblés uniquement par vissage.

7. Groupe compresseur-condenseur suivant la revendication 6, caractérisé par le fait que la fixation des tôles s'effectue par des vis ajustées.

8. Groupe compresseur-condenseur suivant au moins l'une des revendications 1 à 5, caractérisé par le fait que les modules (1, 2) et/ou le groupe (8) en entier sont assemblés par soudures par points.

9. Groupe compresseur-condenseur suivant au moins l'une des revendications 1 à 8, caractérisé par le fait que les tôles élémentaires (3 à 6, 11 à 13, 21, 31, 32, 51) coudées sont munies au moins partiellement d'ajours.

10. Groupe compresseur-condenseur suivant au moins l'une des revendications 1 à 9, caractérisé par le fait que les suspensions (7) sont prévues pour le montage des modules (1, 2) ou du groupe (8) sur ou dans le véhicule.

11. Groupe compresseur-condenseur suivant au moins l'une des revendications 1 à 10, caractérisé par le fait qu'il est combiné avec un groupe de conditionnement d'air avec filtre à air, ventilateur, réfrigérant à air, registre de chauffage, sous la forme d'un appareil de climatisation compact.
